# FASCICULE DE BREVET EUROPEEN

(11) **EP 1 242 310 B1**
(45) Date de publication et mention de la délivrance du brevet: **13.10.2010**
(21) Numéro de dépôt: 00990862.5
(22) Date de dépôt: 29.12.2000
(51) Int. Cl.: C01B 37/00

(54) **PROCEDE DE PREPARATION D'UN MATERIAU MESOSTRUCTURE A PARTIR DE PARTICULES DE DIMENSIONS NANOMETRIQUES**
VERFAHREN ZUR HERSTELLUNG EINES MESOSTRUKTURIERTEN MATERIALS AUS NANOPARTIKELN
METHOD FOR PREPARING A MESOSTRUCTURED MATERIAL FROM PARTICLES WITH NANOMETRIC DIMENSIONS

(30) Priorité: 30.12.1999 FR 9916783
(43) Date de publication de la demande: 25.09.2002
(73) Titulaire: RHODIA CHIMIE, 92512 Boulogne Billancourt Cedex (FR)
(72) Inventeur: CHANE-CHING, Jean-Yves, F-95600 Eaubonne (FR); COBO, Frédéric, F-93120 La Courneuve (FR)
(74) Mandataire: Neyret, Daniel Jean Marie
(86) Numéro de dépôt international: PCT/FR2000/003756
(87) Numéro de publication internationale: WO 2001/049606

(56) Documents cités:
- WO-A-96/39357
- WO-A-98/15500
- US-A- 5 718 878
- ULAGAPPAN N ET AL: "PREPARATION OF LAMELLAR AND HEXAGONAL FORMS OF MESOPOROUS SILICA AND ZIRCONIA BY THE NEUTRAL AMINE ROUTE: LAMELLAR-HEXAGONAL TRANSFORMATION IN THE SOLID STATE" CHEMICAL COMMUNICATIONS,GB,ROYAL SOCIETY OF CHEMISTRY, no. 19, 7 octobre 1996 (1996-10-07), pages 2243-2244, XP000652473 ISSN: 1359-7345
- SCHUETH F ET AL: "Ordered mesoporous silicas and zirconias: Control on length scales between nanometer and micrometer" MATER RES BULL;MATERIALS RESEARCH BULLETIN 1999 ELSEVIER SCIENCE LTD, EXETER, ENGL, vol. 34, no. 3, 1999, pages 483-494, XP000946205
- FROEBA M ET AL: "Mesostructured TiO2: Ligand-stabilized synthesis and characterization" PROCEEDINGS OF THE 1996 13TH INTERNATIONAL SYMPOSIUM ON THE REACTIVITY OF SOLIDS, ISRS. PART 1 (OF 2);HAMBURG, GER SEP 8-12 1996, vol. 101-103, no. part 1, 8 septembre 1996 (1996-09-08), pages 249-253, XP002147884 Solid State Ionics;Solid State Ionics Nov 1997 Elsevier Sci B.V., Amsterdam, Netherlands
- LIU P ET AL: "Mesostructured zirconium oxide" PROCEEDINGS OF THE 1996 MRS SPRING MEETING;SAN FRANCISCO, CA, USA APR 8-11 1996, vol. 431, 1996, pages 101-110, XP000949223 Mater Res Soc Symp Proc;Materials Research Society Symposium Proceedings; Microporous and Macroporous Materials 1996 Materials Research Society, Pittsburgh, PA, USA
- VITTORIO LUCA ET AL: "SYNTHESIS AND CHARACTERIZATION OF MESOSTRUCTURED VANADIUM OXIDE" CHEMISTRY OF MATERIALS,US,AMERICAN CHEMICAL SOCIETY, WASHINGTON, vol. 7, no. 12, 1 décembre 1995 (1995-12-01), pages 2220-2223, XP000626861 ISSN: 0897-4756

## Description

La présente invention a trait à un procédé de préparation d'un matériau mésoporeux ordonné ou mésostructuré, thermiquement stable et possédant un degré de cristallinité important.

Au sens strict du terme, les matériaux dits mésoporeux sont des solides présentant, au sein de leur structure, des pores possédant une taille intermédiaire entre celle des micropores des matériaux de type zéolites et celle des pores macroscopiques.

Plus précisément, l'expression "matériau mésoporeux " désigne à l'origine un matériau qui comporte spécifiquement des pores de diamètre moyen compris entre 2 et 50 nm, désignés par le terme de "mésopores". Typiquement, ces composés sont des composés de type silices amorphes ou paracristallines dans lesquelles les pores sont généralement distribués de façon aléatoire, avec une distribution très large de la taille des pores.

En ce qui concerne la description de tels matériaux, on pourra notamment se reporter à Science, volume 220, pages 365-371 (1983) ou encore au journal of Chemical Society, Faraday Transactions, 1, volume 81, pages 545-548 (1985).

D'autre part, les matériaux dits "structurés" sont quant à eux des matériaux présentant une structure organisée, et caractérisés de façon plus précise par le fait qu'ils présentent au moins un pic de diffusion dans un diagramme de diffusion de rayonnement de type diffusion par des rayons X ou par des neutrons. De tels diagrammes de diffusion ainsi que leur mode d'obtention sont notamment décrits dans Small Angle X-Rays Scattering (Glatter et Kratky - Academic Press London-1982).

Le pic de diffusion observé dans ce type de diagramme peut être associé à une distance de répétition caractéristique du matériau considéré, qui sera désignée dans la suite de la présente description par le terme de "période spatiale de répétition" du système structuré.

Sur la base de ces définitions, on entend par "matériau mésostructuré" un matériau structuré possédant une période spatiale de répétition comprise entre 2 et 50 nm.

Les matériaux mésoporeux ordonnés constituent quant à eux un cas particulier de matériaux mésostructurés. Il s'agit en fait de matériaux mésoporeux qui présentent un agencement spatial organisé des mésopores présents dans leur structure, et qui de ce fait possèdent effectivement une période spatiale de répétition associée à l'apparition d'un pic dans un diagramme de diffusion.

La famille des matériaux de dénomination générique "M41 S", notamment décrite par Kresge et al. dans Nature, volume 359, pages 710-712 (1992) ou par Q. Huo et al. dans Nature, volume 368, pages 317-321 (1994) constitue l'exemple le plus connu de matériaux mésostructurés et mésoporeux ordonnés : il s'agit de silices ou d'aluminosilicates dont la structure est formée de canaux bi- ou tridimensionnels ordonnés selon un agencement hexagonal (MCM-41) ou cubique (MCM-48), ou encore qui possèdent une structure vésiculaire ou lamellaire (MCM-50).

Il est à noter que, bien qu'ils soient constitués d'une structure présentant des canaux et non des mésopores, les composés dits MCM-41 et MCM-48 sont généralement décrits dans la littérature comme étant des matériaux mésoporeux ordonnés. Fengxi Chen et al., par exemple, décrivent en effet, dans Chemical Materials, volume9, N°12, page 2685 (1997) les canaux présents au sein de ces structure comme des "mésopores bi- ou tridimensionnels".

En revanche, les matériaux de structure vésiculaire ou lamellaire de type MCM-50, ne sauraient quant à eux être assimilés à des structures mésoporeuses, dans la mesure où leurs parties poreuses ne peuvent être considérées comme des mésopores. Elles seront donc désignées uniquement par le terme de matériaux mésostructurés dans la suite de la description.

Les matériaux mésostructurés et mésoporeux ordonnés du type des M41 S sont généralement obtenus par un procédé dit de "texturation par cristaux liquides", usuellement désigné par les initiales "LCT" correspondant à l'expression anglaise *"Liquid Crystal Templating".* Ce procédé "LCT" consiste à former, à partir de précurseurs minéraux, une matrice minérale telle qu'un gel de silice ou d'aluminosilicate en présence de composés amphiphiles de type tensioactifs.

Le terme de "texturation par cristaux liquides" vient du fait qu'on peut considérer schématiquement que la structure de cristal liquide initialement adoptée par les molécules de tensioactif imprime à la matrice minérale sa forme finale.

Ainsi, on peut considérer qu'au sein de la structure cristal liquide, les précurseurs minéraux se localisent sur les parties hydrophiles des composés amphiphiles avant de se condenser entre eux, ce qui confère à la matrice minérale obtenue *in fine* un agencement spatial calqué sur celui du cristal liquide. Par élimination du tensioactif, notamment par traitement thermique ou entraînement par un solvant, on obtient un matériau mésostructuré ou mésoporeux ordonné, qui constitue l'empreinte de la structure cristal liquide initiale.

Beck et al. dans le Journal of American Chemical Society, volume 114, page 10834 (1992) expliquent ainsi la structure en nid d'abeille de MCM-41 par l'organisation initiale des molécules de tensioactif sous forme d'une phase cristal liquide de type hexagonale.

Il semble cependant, comme l'ont montré Davis et al. dans Microporous Materials, volume 2, page 27 (1993), que le mécanisme mis en jeu est un peu plus complexe. Il passe en fait dans un premier temps par la formation d'espèces composites constituées de micelles recouvertes de précurseurs minéraux qui s'organisent, dans une seconde étape, en un réseau hexagonal, cubique ou lamellaire. Il n'en reste pas moins cependant que l'agencement final de la matrice minérale obtenue est bien régi par la forme initiale des micelles formées par les molécules amphiphiles utilisées, ce qui justifie la dénomination "LCT" et le fait qu'on emploie généralement le terme d' "agent texturant" pour désigner les composés amphiphiles de type tensioactif mis en oeuvre lors de ce processus.

Compte tenu de leur haute surface spécifique et de leur structure particulière, les matériaux mésostructurés ou mésoporeux ordonnés ainsi obtenus présentent un très grand intérêt, notamment dans le domaine de la catalyse, de la chimie d'absorption ou de la séparation membranaire.

Néanmoins, de façon à les adapter au mieux à ces différentes applications, on a rapidement cherché à les modifier de façon à améliorer leur efficacité dans ces différents domaines.

En premier lieu, on s'est tout d'abord efforcé de modifier la structure du matériau obtenu en jouant sur la nature du système texturant mis en oeuvre. Les travaux de Tanev et al., entre autres, ont par exemple mis en évidence le fait que la taille des pores dépend de la longueur de la chaîne hydrophobe des composés amphiphiles utilisés (Science, volume 267, pages 865-867, 1995). Mais ces travaux ont surtout montré que le passage d'un tensioactif ionique à un agent texturant non chargé mène à un processus dit de "texturation neutre". Ce processus induit une augmentation notable de l'épaisseur des parois des mésostructures, ce qui conduit notamment à une amélioration de la stabilité du composé obtenu.

Cependant, de façon à obtenir des matériaux mésostructurés réellement intéressants, la maîtrise de ces seuls paramètres structurels n'est pas suffisante. En effet, le développement industriel des matériaux mésostructurés est actuellement conditionné par d'autres impératifs concernant la constitution même de la matrice minérale, en particulier son degré de cristallinité et la nature chimique de ses constituants.

Il faut souligner que, de façon générale, les matériaux mésoporeux sont typiquement constitués d'une matrice minérale de type silice, aluminosilicate ou alumine, amorphe ou paracristalline. De façon à améliorer le degré de cristallinité de ces composés, on a donc envisagé de traiter thermiquement les matériaux obtenus. Il est cependant à noter que, si ce type traitement thermique induit effectivement une augmentation de la cristallinité du matériau, il induit également une fragilisation importante de la mésostructure, notamment du fait de la diminution de l'épaisseur des parois, ce qui peut même mener dans certains cas à l'effondrement de la structure mésoporeuse lors de la montée en température.

Par ailleurs, les tentatives effectuées pour obtenir des matériaux mésoporeux cristallins à base de constituants différents, comme les composés du zirconium ou du titane ne mènent généralement qu'à des composés de faible stabilité, ce qui interdit leur utilisation à l'échelle industrielle.

Une mésostructure suffisamment stable ne peut donc être actuellement obtenue qu'en mettant en oeuvre un nombre restreint de composés chimiques, de type silice et/ou alumine, avec en outre un taux de cristallinité relativement faible, ce qui limite les applications potentielles des matériaux obtenus.

Or, bien que le processus de texturation par cristaux liquides mette habituellement en oeuvre des précurseurs minéraux spécifiquement solubles de type silicate ou alcoxyde pour que la texturation soit réellement efficace, les inventeurs ont maintenant découvert que, de façon surprenante, le procédé de texturation par cristaux liquides peut, dans certaines conditions, être conduit en partant de particules colloïdales de dimensions nanométriques, sans pour autant que l'efficacité de la texturation ne soit affectée.

La mise en oeuvre de ce type de particules dans un processus de texturation par cristaux liquides présente de nombreux avantages vis à vis du processus de texturation classique.

En effet, ces particules peuvent, contrairement à des précurseurs minéraux de type moléculaire, posséder des propriétés structurales propres, susceptibles d'être transmises au matériau obtenu lors de la texturation. Ainsi, on conçoit par exemple que la texturation de particules cristallines mènera directement à l'obtention d'un matériau au moins partiellement cristallin, sans qu'un traitement ultérieur de cristallisation à haute température ne soit nécessaire.

De plus, la mise en oeuvre de particules possédant en propre une stabilité mécanique initiale permet en outre la formation d'un matériau stable même avec des composés, tels que l'oxyde de cérium ou de zirconium, qui, selon le processus de texturation classique, mènent à des composés trop fragiles pour être exploitables, notamment au niveau industriel.

Sur la base de cette découverte, la présente invention a pour but de fournir un procédé de préparation de matériaux possédant une structure mésostructurée ou mésoporeuse ordonnée stable à partir de particules de dimensions nanométriques.

Un second but de l'invention est de fournir des matériaux mésostructurés présentant par ailleurs un degré de cristallinité important.

Un autre but de l'invention est d'intégrer, au sein d'une structure mésoporeuse, des composés chimiques possédant des propriétés intrinsèques particulières, ou encore des particules de structures particulières telles que par exemple des structures microporeuses, de façon à conférer au matériau des propriétés spécifiques, mais sans pour autant affecter sa stabilité.

La présente invention a pour objet un procédé de préparation d'un matériau mésoporeux ordonné ou mésostructuré, thermiquement stable et au moins partiellement cristallisé tel que défini dans la revendication 1, ledit procédé comprenant les étapes consistant à:
(A) former une dispersion initiale comprenant :
   (1) des particules colloïdales de dimensions nanométriques, au moins partiellement cristallines dont au moins 50% de la population possède un diamètre moyen compris entre 1 et 40 nm,; et
   (2) un agent texturant qui est un composé non chargé dans les conditions de mise en oeuvre du procédé
(B) concentrer la dispersion obtenue de façon à obtenir un solide par texturation et consolidation progressive des particules colloïdales; et
(C) éliminer l'agent texturant dans le solide obtenu.

Selon la présente invention, un matériau mésoporeux ordonné ou mésostructuré est considéré comme thermiquement stable dans la mesure où sa mésostructure est conservée jusqu'à une température d'au moins 500°C. Plus précisément, un matériau mésoporeux sera généralement considéré comme thermiquement stable au sens de l'invention dans la mesure où, après une calcination de 6 heures à 500°C, sa surface spécifique reste supérieure à 800m² par cm³ de matériau. Cette surface spécifique exprimée en unité de surface par unité de volume de matériau est calculée en multipliant la valeur expérimentale de la surface spécifique exprimée en m²/g par la densité théorique (en g/cm³) du composé chimique constituant le matériau.

Par ailleurs, au sens de l'invention un matériau "mésostructuré, ou mésoporeux ordonné au moins partiellement cristallisé" désigne un matériau présentant spécifiquement, en plus d'un ordre au niveau de la mésostructure, une cristallinité propre des parois de cette mésostructure.

Par "particules colloïdales de dimension nanométrique", on entend au sens de la présente invention des particules de morphologie de préférence isotrope ou sphérique, et dont au moins 50% de la population possède un diamètre moyen compris entre 1 et 40 nm, de préférence entre 3 et 15 nm, et avantageusement entre 5 et 10 nm, avec une répartition granulométrique de préférence monodisperse. L'utilisation de particules possédant une telle granulomètrie mène à l'obtention de matériaux mésostructurés au sein desquels la taille des parois des mésostructures est généralement élevée, ce qui confère notamment au matériau une stabilité mécanique et thermique importante.

Spécifiquement, les particules colloïdales de dimension nanométrique mises en oeuvre selon la présente invention sont des particules au moins partiellement cristallines, c'est-à-dire qu'elles présentent un taux de cristallinité allant de 50 à 100 % en volume. La mise en oeuvre de ces particules partiellement cristallisées permet de conférer aux matériaux mésostructurés obtenus par le procédé de l'invention un taux de cristallinité au moins égal à 20% en volume.

De façon particulière, ces particules colloïdales peuvent également présenter, en plus de cette cristallinité, une structure microporeuse, ce qui confère alors au matériau obtenu *in fine* à la fois une structure globalement mésoporeuse et, par ailleurs, une sous-structure microporeuse.

Par ailleurs, les particules colloïdales mises en oeuvre selon l'invention sont de façon préférentielle constituées d'oxydes, d'hydroydes ou d'oxy-hydroxyde métalliques et peuvent présenter en surface des groupements chimiques variés, notamment des groupements nitrates, acétylacétonates, ou, de façon particulièrement avantageuse, des groupements OH⁻ en forte proportion.

En particulier, ces particules de dimension nanométrique sont, de façon préférentielle, des particules à base d'au moins un composé d'un métal choisi parmi le cérium, le zirconium ou le titane. Ainsi, il peut s'agir avantageusement de particules constituées d'oxyde de cérium CeO₂, d'oxyde de zirconium ZrO₂, d'oxyde de titane TiO₂, ou encore des particules mixtes de type CeO₂/ZrO₂ ou ZrO₂/CeO₂.

Ce type de particules colloïdales de dimensions nanométriques sont bien connues de l'homme du métier et leurs modes d'obtention ont été largement décrits dans l'art antérieur. Ainsi, les particules colloïdales d'oxyde de cérium utilisées selon l'invention correspondent à des particules du type de celles observées par exemple dans les dispersions colloïdales (sols d'oxyde de cérium) décrites notamment dans les demandes de brevets FR 2 416 867, EP 206 906, ou EP 208 580. En ce qui concerne les particules d'oxyde de zircone, on pourra se référer *au* Journal of Gel Science Technology, volume 1, page 223 (1994). On peut également citer l'article de Chemical Materials, volume 10, pages 3217-3223 (1998), en ce qui concerne les particules nanométriques d'oxyde de titane. Les dispersions de particules mixtes de type CeO₂/ZrO₂ (où le cérium est majoritaire) et ZrO₂/CeO₂ (où le zirconium est majoritaire) peuvent être obtenues quant à elles par thermo-hydrolyse de solutions mixtes de nitrate de cérium et de nitrate de zirconium partiellement neutralisées du type de celles décrites dans les demandes de brevet EP 206 906 ou EP 208 580.

De façon générale, les particules dé dimensions nanométriques mises en oeuvre selon l'invention sont de préférence introduites dans le mélange initial sous forme d'une dispersion colloïdale, avantageusement aqueuse, dont la concentration est avantageusement comprise entre 0,1 et 6 mole par litre et, de façon particulièrement préférée, comprise entre 0,5 et 4,5 mole par litre.

La pureté de ces dispersions colloïdales mères à partir desquelles la suspension de l'étape (A) est généralement réalisée peut être définie par la comparaison de la conductivité électrique du surnageant obtenu par ultracentrifugation de ladite dispersion colloïdale mère à 50 000 tours par minute durant 10 heures, par rapport à la conductivité électrique d'une solution témoin d'acide HCl ou de base NaOH possédant le même pH que le surnageant ainsi obtenu.

Sur la base de cette définition, les surnageants obtenus avec suspensions mises en oeuvre selon le procédé de l'invention présentent avantageusement une conductivité inférieure à 200% de la conductivité de la solution témoin, et de façon préférentielle inférieure à 150% de cette conductivité témoin. Ces valeurs de conductivité correspondent en effet à des concentrations d'impuretés suffisamment faibles pour que la structure obtenue *in fine* ne soit pas trop fragilisée du fait de la présence d'éléments étrangers susceptibles d'inhiber la cohésion entre les particules formant le matériau obtenu. Pour l'obtention de dispersions présentant de telles puretés, on peut notamment soumettre à un traitement d'ultrafiltration des dispersions du type de celles décrites par exemple dans les demandes de brevets EP 206 906 ou EP 208 580.

Par ailleurs, l'agent texturant présent dans la dispersion de l'étape (A) est un composé amphiphile de type tensioactif susceptible de former des micelles ou des phases de type cristal liquide dans le milieu réactionnel, de façon à mener, par mise en oeuvre du mécanisme de texturation "LCT" défini précédemment, à la formation d'une matrice minérale possédant une mésostructure organisée.

Compte tenu de la nature et de la taille des particules colloïdales mises en oeuvre et de l'agencement spatial du matériau mésoporeux qu'il souhaite obtenir, l'homme du métier peut, en mettant en oeuvre de simples mesures de routine adapter la nature de cet agent texturant, notamment en fonction du diagramme de phase présenté par ledit agent texturant dans les conditions de mise en oeuvre de l'invention.

Cependant, de façon à mettre en oeuvre un processus de texturation qui présente l'avantage de conduire à des interactions texturant/particules appropriées induisant en particulier une bonne stabilité de la structure finale, l'agent texturant utilisé dans le procédé de l'invention est un composé non chargé dans les conditions de mise en oeuvre du procédé.

Ainsi, dans le cas d'une mise en oeuvre du procédé en milieu acide, en particulier pour une valeur du pH de la dispersion initiale inférieure à 4,5 et tout particulièrement pour une valeur du pH inférieure à 3, l'agent texturant utilisé selon l'invention est, de façon préférentielle, un tensioactif non ionique de type copolymère séquencé, et plus préférentiellement un copolymère tribloc poly(oxyde d'éthylène)-poly(oxyde de propylène)-poly(oxyde d'éthylène) dit PEO-PPO-PEO ou (EO)ₓ-(PO)_{y}-(EO)_{z}, du type de ceux décrits notamment par Zaho et al. dans le Journal of the American Chemical Society, volume 120, pages 6024-6036 (1998), et commercialisés sous le nom de marque générique de Pluronic^{®} par BASF. Avantageusement, on peut également mettre en oeuvre des tensioactifs non ioniques tels- que les poly(oxyde d'éthylène) greffés (EO)ₓC_{y} commercialisés par Aldrich sous les noms de marques Brij^{®}, Tween^{®} ou Span^{®}, ou encore des composés de type poly(oxyde d'éthylène)-alkyle.

Dans le cas d'une mise en oeuvre du procédé en milieu basique, en particulier pour une valeur du pH de la dispersion initiale supérieure à 8, et tout particulièrement pour une valeur du pH supérieure à 9, l'agent texturant mis en oeuvre est préférentiellement un tensioactif de type alkylamine primaire, telle que par exemple la décylamine, la dodécylamine ou encore la tétradécylamine.

Par ailleurs, de façon à observer un effet de texturation efficace, le rapport particules/texturant dans la dispersion formée lors de l'étape (A) est avantageusement tel que le rapport volumique (texturant)/(texturant+particules), est comprise entre 0,36 et 0,70 , et de préférence entre 0,40 et 0,65. Dans le calcul de ce rapport volumique, on tient compte de la densité réelle des particules colloïdales mises en oeuvre, généralement inférieure à la densité théorique du matériau de type oxyde constitutif desdites particules colloïdales.

Il est à souligner que, de façon à observer un phénomène de texturation par cristaux liquides efficace, on travaille habituellement, notamment dans le cas de la formation d'une matrice minérale à partir d'un alcoxyde de silice, dans un milieu où les interactions (précurseur minéral)-texturant sont favorisées.

Dans le cas des dispersions mises en oeuvre selon l'invention, les interactions particules-texturant observées sont fonction de la nature du texturant et des particules utilisées. Ces interactions peuvent, dans certains cas, être suffisantes en elles-mêmes et mener à un processus de texturation du type de la texturation neutre décrite notamment dans Science, volume 267, pages 865-867 (1995).

Cependant, de façon à ce que ce que des interactions suffisamment fortes puissent être observées au sein de la de la suspension de départ, la dispersion formée lors de l'étape (A) contient souvent de façon préférentielle un agent dit d'interaction dont le rôle est, comme son nom l'indique, d'augmenter l'interaction entre l'agent texturant et les particules colloïdales.

La nature exacte de cet agent d'interaction est à adapter en fonction du type de particules colloïdales utilisées et de l'agent texturant mis en oeuvre. Cela étant, la caractéristique essentielle de l'agent d'interaction est qu'il doit mener, en s'intercalant entre la particule et le texturant, à la formation d'une liaison non covalente, notamment de type liaison hydrogène, électrostatique ou de Van der Waals, en induisant globalement une augmentation de l'interaction particules-texturant.

Ainsi, dans le cas des particules colloïdales de type oxyde de cérium, de zirconium ou de titane mis en oeuvre de façon préférentielle dans le procédé de l'invention, l'agent d'interaction est avantageusement un acide minéral ou organique choisi avantageusement parmi l'acide chlorhydrique, l'acide nitrique, l'acide sulfurique, l'acide phosphorique ou encore l'acide acétique.

Ce type d'acide, qu'on peut schématiser par H⁺X⁻, où X⁻ est avantageusement un ion choisi parmi les ions halogénures tels que par exemple les ions chlorures, ou parmi l'ion nitrate, l'ion hydrogénosulfate, l'ion sulfate, l'ion hydrogénophosphate, ou l'ion acétate, mène en effet, en particulier avec les texturants non ioniques du type des texturants préférentiels de type poly(oxyde d'éthylène) modifiés définis précédemment, à des liaisons de type (cation métallique)---X⁻---H⁺---texturant qui induisent une augmentation effective de l'interaction globale particule-texturant.

Dans le cas de l'utilisation de ce type d'agents d'interaction acides et de ces texturants particuliers, la quantité d'agent d'interaction acide mise en oeuvre de façon à obtenir une interaction optimale est avantageusement telle que le rapport molaire (ions H⁺⁾/(monomères d'oxyde d'éthylène) est inférieur à 0,3, et de préférence inférieur à 0,2.

Le but de l'étape (A) du procédé de l'invention est donc de fournir une suspension au sein de laquelle les interactions particules-texturant sont suffisamment fortes pour amorcer le processus de texturation.

Toutefois, il est à souligner que, malgré l'existence de ces interactions, le processus de texturation menant à la formation du matériau mésoporeux ordonné n'a lieu à proprement parler que lors de la concentration survenant lors de l'étape (B).

En effet, cette étape de concentration va conduire à une augmentation progressive des interactions, ce qui va mener finalement à une texturation effective des particules colloïdales.

A ce sujet, il est à noter que les suspensions formées lors de l'étape (A) sont des suspensions aqueuses contenant avantageusement un co-solvant soluble à l'eau et possédant de façon préférentielle un bas point d'ébullition. Le rapport volumique co-solvant/eau au sein de la suspension est alors avantageusement inférieur ou égal à 6, et de façon préférentielle inférieur ou égal à 4.

Ce co-solvant est de préférence un alcool, choisi avantageusement parmi le méthanol, l'éthanol, le propanol ou l'isopropanol. De ce fait, les suspensions formées lors de l'étape (A) sont préférentiellement des dispersions hydro-alcooliques.

Le rôle du co-solvant mis en oeuvre dans le procédé de l'invention est complexe. Néanmoins, on peut indiquer, à titre non limitatif, que le co-solvant peut notamment permettre, selon les cas de figure, d'éviter que des contraintes capillaires trop fortes ne s'exercent au cours de l'étape (B) de concentration et de formation du matériau mésoporeux. Le co-solvant peut également faciliter, de par son bas point d'ébullition, l'étape (B) de concentration ultérieure, notamment dans le cas où celle-ci est conduite par évaporation.

En pratique, l'ordre d'addition des différents constituants des suspensions de l'étape (A) n'est pas critique. Cependant, de façon avantageuse, on introduit généralement tout d'abord les particules colloïdales sous forme d'une suspension aqueuse à laquelle on ajoute le cas échéant l'agent d'interaction, puis on incorpore l'agent texturant sous agitation, l'ajout éventuel du co-solvant se faisant préférentiellement dans une dernière étape.

Par ailleurs, l'étape (A) de formation de la suspension est généralement conduite à température ambiante, c'est-à-dire à une température avantageusement comprise entre 15°C et 35°C.

L'étape (B) de concentration de la suspension obtenue lors de l'étape (A) peut être conduite selon tout moyen connu de l'homme du métier. Son but est de mener à la formation de la structure mésoporeuse par texturation des particules colloïdales et consolidation progressive de la mésostructure obtenue.

Néanmoins, de façon à ne pas fragiliser la structure mésoporeuse en cours de formation, cette étape de concentration est réalisée de façon préférentielle par évaporation, ce qui présente l'avantage de mener à une concentration progressive des espèces présentes.

Cette évaporation peut être conduite selon tout moyen connu de l'état de la technique. Elle peut ainsi notamment être réalisée sous pression atmosphérique, sous vide partiel, ou sous balayage de gaz, par exemple sous balayage d'air ou d'azote. On peut également travailler sous pression partielle d'eau contrôlée. Par ailleurs, cette évaporation peut être réalisée en une seule étape à une température donnée, ou en plusieurs étapes consistant alors en plusieurs évaporations successives avec des paliers de température croissants. Ces étapes d'évaporation en température peuvent être conduite notamment dans une étuve, ou encore au sein d'une installation industrielle appropriée de type sécheur ou atomiseur.

Lorsque l'étape de concentration s'effectue en une seule étape, la température d'évaporation est généralement comprise entre 15°C et 80°C, et de préférence entre 20°C et 60°C. La dispersion de l'étape (A) peut alors être portée à la température d'évaporation soit par une montée progressive en température avec un profil de montée en température compris entre 0,1 et 6°C par minute, soit en la plaçant directement dans un milieu chauffé tel qu'une étuve préalablement portée à la température d'évaporation. La durée de l'évaporation est à adapter en fonction des particules, du texturant et du milieu de la suspension initiale et est généralement comprise entre 3 heures et 7 jours.

Lorsque l'étape de concentration s'effectue en plusieurs étapes, la température des différents paliers successifs est généralement comprise entre 15°C et 120°C, et de préférence entre 20°C et 80°C. La durée de chacun des paliers est là aussi à adapter en fonction des particules, du texturant et du milieu de la suspension initiale. Elle peut varier entre quelques heures et quelques jours, de préférence entre 3 heures et 24 heures. Les étapes de montée en température peuvent être effectuées avec un gradient de montée en température compris entre 0,1 et 6°C par minute, ou encore par passage direct dans un milieu chauffé tel qu'une étuve préalablement portée à la température de palier. Ainsi, on peut par exemple réaliser initialement un palier à 20°C, puis effectuer une montée directe à 80°C par mise à l'étuve et réaliser ensuite un second palier à cette température de 80°C.

A l'issue de cette étape (B) de concentration, le produit présente avantageusement une teneur en eau inférieure à 500% en masse, de préférence inférieure à 200% en masse, et de façon particulièrement préférée comprise entre 0,1 et 100% en masse.

Le matériau obtenu peut alors être refroidi à température ambiante. Ledit matériau possède généralement la stabilité mécanique nécessaire pour être éventuellement transféré, par exemple dans un creuset de calcination.

De façon à obtenir un matériau de structure mésoporeuse, le solide obtenu à l'issu de l'étape (B) est ensuite soumis à l'étape (C) d'élimination de l'agent texturant.

Cette étape peut notamment être conduite par entraînement par un solvant. Il est à noter à ce propos que l'entraînement par un solvant est facilité par le fait qu'on met en oeuvre de façon préférentielle un composé amphiphile non chargé, ce qui induit une interaction suffisamment faible entre l'agent texturant et le matériau pour permettre ce type d'élimination.

Cependant, de façon particulièrement avantageuse, cette étape (C) d'élimination de l'agent texturant est réalisée par un traitement thermique de type calcination. En effet, en plus de l'élimination de l'agent texturant et des autres composés organiques éventuellement présents au sein du solide, ce type de traitement thermique permet par ailleurs un renforcement de la cohésion du réseau de particules formant le matériau. Dans ce cas, cette calcination est généralement réalisée sous azote ou sous air et à une température suffisante pour éliminer le ou les composé(s) organique(s) présent(s) au sein du solide obtenu et pour améliorer la cohésion du matériau. Ainsi, de façon avantageuse, le traitement thermique est généralement conduit à une température supérieure à 200°C, et de préférence à une température supérieure à 350°C. La vitesse de montée en température est alors généralement comprise entre 0,2°C et 5°C par minute, et de préférence entre 0,5°C et 2,5°C par minute. Cette montée en température est suivie d'un palier de calcination dont la durée est en général comprise entre 0,5 et 10 heures, et avantageusement entre 1 et 6 heures.

Selon un second aspect, la présente invention a également pour objet les matériaux mésoporeux ordonné ou mésostructurés, thermiquement stables et au moins partiellement cristallisés obtenus selon le procédé décrit ci-dessus, tels que définis dans la revendication 25.

Compte tenu de l'utilisation spécifique de particules au moins partiellement cristallisées dans leur élaboration, les matériaux de l'invention présentent généralement au niveau de leur parois un taux de cristallinité supérieur à 20% en volume Avantageusement, ce taux de cristallinité peut être supérieur à 30% en volume, voire à 50% en volume. On peut même parvenir à réaliser selon le procédé de la présente invention des matériaux présentant dans certains cas un taux de cristallinité d'au moins 90% en volume.

Cette cristallinité des matériaux de l'invention peut notamment être mise en évidence par la comparaison des résultats obtenus par diffraction de rayon X par rapport aux résultats observées avec des échantillons témoins parfaitement cristallisés. Dans ce type de diagramme par diffraction aux rayons X, si on balaye dans une gamme de longueur d'onde suffisante, on peut voir apparaître le double niveau d'ordre des matériaux de l'invention. En effet, les diagrammes de diffractions X obtenus avec les matériaux mésostructurés et partiellement cristallins de l'invention présentent d'une part des pics correspondant à des-périodes de répétitions de l'ordre de quelques angströms, caractérisant la cristallinité propre des réseaux cristallins présent au sein des parois, et d'autre part des pics caractéristiques de la période spatiale de répétition de la mésostructure, comprise entre 2 et 50 nm.

La cristallinité propre des parois est également observable par microscopie électronique en transmission à haute résolution.

Par ailleurs, la microscopie électronique permet de déterminer la structure des matériaux mésoporeux de l'invention.

Avantageusement, les matériaux mésoporeux ordonnés ou mésostructurés de la présente invention sont des solides présentant au moins localement une ou plusieurs mésostructure(s) choisie(s) parmi :
- les mésostructures mésoporeuses de symétrie hexagonale tridimensionnelle P63/mmc, de symétrie hexagonale bidimensionnelle P6mm, de symétrie cubique tridimensionnelle la3d, lm3m ou Pn3m ;
- les mésostructures de type vésiculaires ou lamellaires ; ou
- les mésostructures de symétrie L3 dite phases éponge.

En ce qui concerne la définition de ces différentes symétries et structures, on pourra notamment se référer à Chemical Materials, volume 9, No 12, pages 2685-2686 (1997) ou encore à Nature, volume 398, pages 223-226 (1999), et, en ce qui concerne les mésostructures dites phases éponges, à l'article de McGrath et al. dans Science, volume 277, pages 552-556 (1997).

Les périodes de répétition des mésostructures présentes au sein des matériaux de l'invention sont généralement de l'ordre de 3 à 50 nm. De préférence elles sont comprises entre 4 et 30 et avantageusement entre 5 et 20. Dans le cas spécifique de structure mésoporeuses ordonnées, les pores observés sont généralement tels qu'au moins 50% de la population des pores présents au sein de la structure possède un diamètre moyen compris entre 2 et 10 nm.

Notamment compte tenu de la mise en oeuvre spécifique de particules possédant une taille moyenne de l'ordre de 1 à 40 nm dans le procédé de préparation, l'épaisseur moyenne des parois des mésostructures des matériaux de l'invention est généralement élevée. Ainsi, cette épaisseur moyenne des parois est généralement au moins de l'ordre de la taille des particules mises en oeuvre dans le procédé et elle est de ce fait généralement comprise entre 2 et 40 nm. De façon avantageuse, elle est comprise entre 3 et 15 nm, et de façon encore plus avantageuse, cette épaisseur moyenne est comprise entre 4 et 10 nm, ce qui confère notamment au matériau obtenu une stabilité mécanique importante.

En ce qui concerne la stabilité thermique des matériaux mésostructurés de l'invention, il est à noter qu'après une calcination d'une durée de 6 heures à 500°C, leur surface spécifique reste généralement supérieure à 800 m²/cm³. Avantageusement, elle peut même être supérieure à 1000 m²/ cm³, et elle peut même dans certains cas atteindre des valeurs supérieures à 1400 m²/cm³.

Les matériaux de la présente invention sont constitués de façon préférentielle d'oxyde de cérium, d'oxyde de zirconium, d'oxyde de titane ou d'un mélange de ces composés. Ainsi, le procédé de la présente invention permet d'obtenir des matériaux nouveaux, à la fois mésostructurés, partiellement cristallins et thermiquement stables, et composés essentiellement d'oxyde de cérium, d'oxyde de zirconium, d'oxyde de titane ou d'un mélange de ces composés, notamment d'un mélange de type CeO₂/ZrO₂ ou ZrO₂/CeO₂. et qui n'ont jamais été décrits dans l'état de la technique.

Par "partiellement cristallin", on entend que ces matériaux mésoporeux présentent un taux de cristallinité supérieur à 20% en volume, avantageusement supérieur à 30% en volume, et de façon particulièrement préférée supérieur à 50% en volume.

D'autre part, par "matériau composé essentiellement d'un oxyde de cérium, de zirconium et/ou de titane ", on entend spécifiquement au sens de la présente invention un matériau constitué à plus de 95%, avantageusement à plus de 97%, et particulièrement préférentiellement à plus de 98% en masse d'un oxyde de cérium, de zirconium et/ou de titane.

De plus, il est à noter que ces matériaux composés essentiellement d'un oxyde de cérium, de zirconium et/ou de titane sont des composés qui ne contiennent spécifiquement aucun élément supplémentaire introduit de façon à assurer une cohésion du matériau. En particulier, les matériaux composés essentiellement d'un oxyde de cérium, de zirconium et/ou de titane au sens de la présente invention ne sont pas des matériaux comprenant une phase minérale de type silice ou alumine jouant le rôle de liant entre des particules d'oxyde de cérium, de zirconium et/ou de titane.

Par ailleurs, il est à noter que le principe général du procédé de la présente invention peut être appliqué à de nombreux types de particules colloïdales. Il est donc à souligner que les matériaux obtenus selon le procédé de la présente invention ne sont donc pas limités à ces composés particuliers constitués d'oxyde de cérium, de zirconium et/ou de titane.

Compte tenu de leur cristallinité importante, de leur structure mésoporeuse, de l'intégration dans leur structure d'éléments métalliques d'intérêt, et de leur stabilité thermique relativement importante, les matériaux de la présente invention ont de nombreuses applications potentielles, notamment dans le domaine de la catalyse, en particulier dans le domaine de la dépollution automobile ou de la dénitrification d'effluents.

Les exemples illustratifs exposés ci-après concernent la préparation de matériaux mésostructurés selon l'invention, obtenu par structuration de particules d'oxyde de cérium de dimensions nanométriques.

### Exemple 1 :

### Etape 1 : Préparation d'une dispersion colloïdale aqueuse de particules d'oxyde de cérium de dimensions nanométriques.

On a préparé, suivant le mode opératoire décrit à l'exemple 1 de la demande de brevet EP 208 580, un hydrate de cérium, redispersable dans l'eau. La teneur en CeO₂ de l'hydrate ainsi préparé est de 68,57% en masse.

On a ensuite additionné 200 g d'eau déminéralisée à 250 g de l'hydrate de cérium ainsi obtenu, puis on a effectué une dispersion à l'ultraturax. La dispersion a été centrifugée pendant 15 minutes à raison de 4500 tours par minute. On a alors récupéré un culot humide de 240 g. On a de nouveau ajouté à ce culot humide 180 g d'eau , le volume total de la dispersion après addition d'eau étant de 250 ml . Après ré-homogénéisation à l'ultraturax, cette dispersion colloïdale, limpide à l'oeil, a été lavée par 650 ml d'eau, puis concentrée par passage sur une membrane d'ultrafiltration de 3 KD.

On a ainsi obtenu une dispersion colloïdale de particules de CeO₂ de dimensions nanométriques parfaitement cristallisées et possédant un diamètre moyen de 5 nm.

Sur une aliquote de la dispersion ainsi obtenue, la concentration finale en CeO₂ de la dispersion, déterminée par étuvage et calcination, était de 4M en CeO₂. Par ailleurs, la densité de la dispersion était de 1,67 g/cm³.

Une autre aliquote de la dispersion a été soumise à une ultracentrifugation à 50 000 tour par minute durant 6 heures. On a recueilli un surnageant limpide. Par dosage acido-basique , on a déterminé une acidité libre de 0,09 M . Le rapport molaire (H+/Ce) au sein de la suspension préparée était donc de 0,0225. Après dilution du surnageant d'ultracentrifugation par 4, on a déterminé une conductivité égale à 9,22 mS/cm.

### Etape 2 : Préparation du matériau mésostructuré.

(A) dans un bécher, on a versé 8,74 g d'éthanol pur Prolabo, puis 2 g d'une solution acide chlorhydrique 0,05M et on a ensuite additionné au mélange obtenu 1 g de Pluronic^{®} P123 . Ce composé Pluronic P123 est un tensioactif de type copolymère séquencé tribloc en provenance de la société BASF ayant pour formule développée HO(CH₂CH₂O)₂₀(CH₂CH₃COH)₇₀(CH₂CH₂O)₂₀H et une masse moléculaire moyenne égale à 5750 g/mole. Le mélange ainsi réalisé a été mis sous agitation durant 5 minutes. On a alors additionné de manière instantanée 8,26 g de la dispersion colloïdale de CeO₂ précédemment préparée et on a poursuivi l'agitation durant 15 minutes.
(B) la dispersion obtenue a ensuite été placée dans une boite de Pétri en verre de diamètre 8 cm et a été soumise à une évaporation à 20°C , pendant une nuit sous une hotte aspirante.
(C) Le produit sec obtenu a alors été transféré dans une étuve préalablement portée à 80°C. Le traitement thermique à 80°C a été conduit durant 16 heures. Le produit a ensuite été calciné à une température de 500°C, avec une montée température de 1°C/mn et un palier à 500°C de 6 heures.

L'observation en microscopie électronique en transmission du matériau obtenu à l'issu de ces différentes étapes fait apparaître l'existence d'une mésostructure de type hexagonale.

La surface spécifique du matériau a été déterminée égale à 170 m²/g, soit à1224 m²/cm³.

Par ailleurs, la taille moyenne des pores déterminée par BET est de 3,8 nm.

### Exemple 2 :

(A) Dans un bécher, on versé 8,74 g d'eau, puis 2 g d'une solution d'acide chlorhydrique 0,05M et on a ensuite additionné 1 g de copolymère Pluronic P123 en provenance de la société BASF. Le mélange ainsi obtenu a été mis sous agitation durant 25 minutes. On a ensuite additionné de manière instantanée 8,26 g de la dispersion colloïdale de CeO₂ préparée dans l'étape 1 de l'exemple 1 et on a laissé l'agitation se poursuivre durant 15 minutes.
(B) La dispersion obtenue a ensuite été placée dans une boite de Pétri en verre de diamètre 8 cm et a été soumise à une évaporation à 20°C pendant une nuit sous une hotte aspirante.
(C) Le produit sec obtenu a alors été transféré dans une étuve préalablement portée à 35°C. Le traitement thermique à 35°C a été conduit durant une nuit. Le produit a ensuite été transféré dans une autre étuve préalablement portée à 80°C. Ce second traitement thermique à 80°C a été conduit durant 16 heures. Le matériau obtenu a alors été soumis à une température de 500°C, avec une montée température de 1°C/mn et un palier à 500°C de 6 heures

L'observation en microscopie électronique en transmission du matériau obtenu à l'issu de ces différentes étapes fait apparaître l'existence d'une mésostructure de type hexagonale.

La surface spécifique du matériau obtenu est égale à 130 m²/g, soit soit à 936 m²/cm³.

### Exemple 3 :

(A) Dans un bécher, on versé 8,74 g d'eau, puis 2 g d'une solution d'acide chlorhydrique 0,05M et on a ensuite additionné 1 g de copolymère Pluronic P123 en provenance de la société BASF. Le mélange ainsi obtenu a été mis sous agitation durant 25 minutes. On a ensuite additionné de manière instantanée 6,64 g de la dispersion colloïdale de CeO₂ préparée dans l'étape 1 de l'exemple 1 et on a laissé l'agitation se poursuivre durant 15 minutes.
(B) La dispersion obtenue a ensuite été placée dans une boite de Pétri en verre de diamètre 8 cm et a été soumise à une évaporation à 60°C pendant 72 heures dans une étuve.
(C) Le produit sec obtenu a alors été transféré dans un creuset et a été soumis à une calcination à une température de 500°C, avec une montée température de 1°C/mn et un palier à 500°C de 6 heures.

L'observation en microscopie électronique en transmission du matériau obtenu à l'issu de ces différentes étapes fait apparaître l'existence d'une mésostructure de type hexagonale.

La surface spécifique du matériau obtenu est égale à 135 m²/g, soit à 972 m²/cm³.

### Exemple 4 :

(A) Dans un bécher, on versé 8,74 g d'ethanol, puis 2 g d'une solution d'acide chlorhydrique 0,25M et on a ensuite additionné 1 g de copolymère Pluronic P123 en provenance de la société BASF. Le mélange ainsi obtenu a été mis sous agitation durant 25 minutes. On a ensuite additionné de manière instantanée 6,64 g de la dispersion colloïdale de CeO₂ préparée dans l'étape 1 de l'exemple 1 et on a laissé l'agitation se poursuivre durant 15 minutes.
(B) La dispersion obtenue a ensuite été placée dans une boite de Pétri en verre de diamètre 8 cm et a été soumise à une évaporation à 20°C pendant 72 heures sous une hotte aspirante.
(C) Le produit sec obtenu a alors été transféré dans un creuset et a alors été soumis à une calcination à une température de 500°C, avec une montée température de 1 °C/mn et un palier à 500°C de 6 heures

L'observation en microscopie électronique en transmission du matériau obtenu à l'issu de ces différentes étapes fait apparaître l'existence d'une mésostructure de type hexagonale.

La surface spécifique du matériau obtenu est égale à 130 m²(g soit à 936 m²/cm³.

## Revendications

1. Procédé de préparation d'un matériau mésoporeux ordonné ou mésostructuré, thermiquement stable et au moins partiellement cristallisé, ledit procédé comprenant les étapes consistant à :
(A) former une dispersion initiale comprenant :
(1) des particules colloïdales.de dimensions nanométriques, au moins partiellement cristallines, dont au moins 50% de la population possède un diamètre moyen compris entre 1 et 40 nm; et
(2) un agent texturant qui est un composé non chargé dans les conditions de mise en oeuvre du procédé
(B) concentrer la dispersion obtenue de façon à obtenir un solide par texturation et consolidation progressive des particules colloïdales; et
(C) éliminer l'agent texturant dans le solide obtenu.

2. Procédé de préparation d'un matériau mésoporeux ordonné ou mésostructuré selon la revendication 1, **caractérisé en ce que** le milieu de la dispersion formée lors de l'étape (A) est un milieu acide et **en ce que** l'agent texturant mis en oeuvre est un tensioactif non ionique de type copolymère séquencé.

3. Procédé de préparation d'un matériau mésoporeux ordonné ou mésostructuré selon la revendication 2, **caractérisé en ce que** le milieu de la dispersion formée lors de l'étape (A) est un milieu acide et **en ce que** l'agent texturant mis en oeuvre est un tensioactif non ionique de type copolymère séquencé, choisi parmi les copolymères tribloc poly(oxyde d'éthylène)-poly(oxyde de propylène)-poly(oxyde d'éthylène) ou les poly(oxyde d'éthylène) greffés.

4. Procédé de préparation d'un matériau mésoporeux ordonné ou mésostructuré selon la revendication 1, **caractérisé en ce que** le milieu de la dispersion formée lors de l'étape (A) est un milieu basique et **en ce que** l'agent texturant mis en oeuvre un tensioactif de type alkylamine primaire. **en ce que** lesdites particules colloïdales de dimensions nanométriques présentent un taux de cristallinité allant de 50 à 100 % en volume.

5. Procédé de préparation d'un matériau mésoporeux ordonné ou mésostructuré selon l'une des revendication précédentes, **caractérisé en ce que** lesdites particules colloïdales de dimensions nanométriques des particules de morphologie isotrope ou sphérique dont au moins 50% de la population possède un diamètre moyen compris entre 3 et 15 nm, avec une répartition granulométrique de ces particules de préférence monodisperse.

6. Procédé de préparation d'un matériau mésoporeux ordonné ou mésostructuré selon l'une des revendications précédentes, **caractérisé en ce que** lesdites particules colloïdales sont des particules de morphologie isotrope ou sphérique dont au moins 50% de la population possède un diamètre moyen compris entre 5 et 10 nm, avec une répartition granulométrique de ces particules de préférence monodisperse.

7. Procédé de préparation d'un matériau mésoporeux ordonné ou mésostructuré selon l'une quelconque des revendications précédentes **caractérisé en ce que** lesdites particules colloïdales de dimensions nanométriques présentent un taux de cristallinité allant de 50 à 100 % en volume.

8. Procédé de préparation d'un matériau mésoporeux ordonné ou mésostructuré selon l'une quelconque des revendications précédentes, **caractérisé en ce que** lesdites particules colloïdales de dimensions nanométriques sont introduites dans le mélange initial sous forme d'une dispersion mère dont la concentration est comprise entre 0,1 et 6 moles par litre.

9. Procédé de préparation d'un matériau mésoporeux ordonné ou mésostructuré selon la revendication 8, **caractérisé en ce que** la conductivité électrique du surnageant obtenu par ultracentrifugation à 50 000 tours par minute durant 10 heures de ladite dispersion mère contenant les particules colloïdales est inférieure à 200% de la conductivité d'une solution témoin d'acide HCl ou de base NaOH possédant le même pH que le surnageant ainsi obtenu.

10. Procédé de préparation d'un matériau mésoporeux ordonné ou mésostructuré selon l'une quelconque des revendications 1 à 9, **caractérisé en ce que** lesdites particules colloïdales de dimensions nanométriques sont des particules à base d'au moins un composé d'un métal choisi parmi le cérium, le zirconium ou le titane, choisies de préférence parmi les particules d'oxyde de cérium CeO₂, d'oxyde de zirconium ZrO₂, d'oxyde de titane TiO_{2,} ou les particules mixtes de type CeO₂/ZrO₂ ou ZrO₂/CeO₂.

11. Procédé de préparation d'un matériau mésoporeux ordonné ou mésostructuré selon l'une quelconque des revendications 1 à 10, **caractérisé en ce que** le rapport volumique (texturant)/(texturant+particules) est compris entre 0,36 et 0,70.

12. Procédé de préparation d'un matériau mésoporeux ordonné ou mésostructuré selon l'une quelconque des revendications 1 à 11, **caractérisé en ce que** la suspension formée lors de l'étape (A) comprend en outre un agent d'interaction.

13. Procédé de préparation d'un matériau mésoporeux ordonné ou mésostructuré selon la revendication 12, **caractérisé en ce que** les particules colloïdales mises en oeuvre sont de type oxyde de cérium, de zirconium et/ou de titane et **en ce que** ledit agent d'interaction est un acide minéral ou organique.

14. Procédé de préparation d'un matériau mésoporeux ordonné ou mésostructuré selon la revendication 13, **caractérisé en ce** l'agent texturant est de type poly(oxyde d'éthylène) modifié et en ce que le rapport molaire (ions H⁺⁾/(monomères d'oxyde d'éthylène) au sein de la suspension est inférieur à 0,3.

15. Procédé de préparation d'un matériau mésoporeux ordonné ou mésostructuré selon l'une quelconque des revendications 1 à 14, **caractérisé en ce que** la suspension formée lors de l'étape (A) est une suspension aqueuse contenant en outre un co-solvant.

16. Procédé de préparation d'un matériau mésoporeux ordonné ou mésostructuré selon la revendication 15, **caractérisé en ce que** ledit co-solvant est choisi parmi le méthanol, l'éthanol, le propanol ou l'isopropanol.

17. Procédé de préparation d'un matériau mésoporeux ordonné ou mésostructuré selon la revendication 14 ou la revendication 16, **caractérisé en ce que** le rapport volumique co-solvant/eau au sein de la suspension est inférieur ou égal à 6.

18. Procédé de préparation d'un matériau mésoporeux ordonné ou mésostructuré selon l'une quelconque des revendications 1 à 17, **caractérisé en ce que** l'étape (B) de concentration est réalisée par évaporation.

19. Procédé de préparation d'un matériau mésoporeux ordonné ou mésostructuré selon la revendication 18, **caractérisé en ce que** ladite évaporation est conduite en une seule étape à une température comprise entre 15°C et 80°C, pendant une durée comprise entre 3 heures et 7 jours.

20. Procédé de préparation d'un matériau mésoporeux ordonné ou mésostructuré selon la revendication 18, **caractérisé en ce que** ladite évaporation est conduite en plusieurs étapes avec des paliers de température croissants compris entre 15°C et 120°C, la durée de chacun des paliers étant comprise entre 3 heures et 24 heures et les étapes de montée en température pouvant être effectuées avec un gradient de montée en température compris entre 0,1 et 6°C par minute ou par passage direct dans un milieu préalablement porté à la température de palier.

21. Procédé de préparation d'un matériau mésoporeux ordonné ou mésostructuré selon l'une quelconque des revendications 1 à 20, **caractérisé en ce que** l'étape (C) d'élimination de l'agent texturant est réalisée par entraînement par un solvant.

22. Procédé de préparation d'un matériau mésoporeux ordonné ou mésostructuré selon l'une quelconque des revendications 1 à 21, **caractérisé en ce que** l'étape (C) d'élimination de l'agent texturant est réalisée par un traitement thermique de type calcination.

23. Procédé de préparation d'un matériau mésoporeux ordonné ou mésostructuré selon la revendication 22, **caractérisé en ce que** ledit traitement thermique de type calcination est conduit à une température de calcination supérieure à 200°C, avec une vitesse de montée en température comprise entre 0,2°C et 5°C par minute, suivie d'un palier de calcination à ladite température de calcination d'une une durée comprise entre 0,5 et 10 heures.

24. Matériau mésoporeux ordonné ou mésostructuré, thermiquement stable et au moins partiellement cristallisé, susceptible d'être préparé selon le procédé de l'une quelconque des revendications 1 à 23, ledit materiau ayant un double niveau d'ordre, observable sur un diagramme de diffraction aux rayons X du materiau, qui présente des pics correspondant à des périodes de répétition de l'ordre de quelques angströms et des pics caracteristiques de la période spatiale de répétition de la mésostructure, comprise entre 2 et 50 mm.

25. Matériau mésostructuré, ou mésoporeux ordonné, partiellement cristallin et thermiquement stable, constitué essentiellement d'un composé choisi parmi l'oxyde de cérium, l'oxyde de zirconium, l'oxyde de titane ou un mélange de ces composés, tel qu'un mélange de type CeO₂/ZrO₂ ou ZrO₂/CeO₂, ledit matériau ayant un double niveau d'ordre, observable sur un diagramme de diffraction aux rayons X du matéeriau, qui présente des pics correspondant à des périodes de répétition de l'ordre de quelques angströms et des pics caracteristiques de la période spatiale de répétition de la mésostructure, comprise entre 2 et 50 mm.

26. Matériau selon la revendication 24 ou la revendication 25, **caractérisé en ce que** le taux de cristallinité dudit matériau est supérieur à 20% en volume.

27. Matériau selon la revendication 24 ou la revendication 25, **caractérisé en ce que** le taux de cristallinité dudit matériau est supérieur à 30% en volume.

28. Matériau selon l'une quelconque des revendications 24 a 27, **caractérisé en ce que** l'épaisseur moyenne des parois de la mésostructure dudit matériau est comprise entre 2 et 40 nm.

29. Matériau selon l'une quelconque des revendications 24 à 27, **caractérisé en ce que** l'épaisseur moyenne des parois de la mésostructure dudit matériau est comprise entre 3 et 15 nm.

30. Matériau selon l'une quelconque des revendications 24 à 29, **caractérisé en ce que** l'épaisseur moyenne des parois de la mésostructure dudit matériau est comprise entre 4 et 10 nm.

31. Matériau selon l'une quelconque des revendications 24 à 30, **caractérisé en ce qu'**après une calcination de 6 heures à 500°C, la surface spécifique dudit matériau est supérieure à 800 m²/ cm³.

32. Matériau selon l'une quelconque des revendications 24 à 31, **caractérisé en ce qu'**après une calcination de 6 heures à 500°C, la surface spécifique dudit matériau est supérieure à 1000 m²/cm³.

33. Matériau selon l'une quelconque des revendications 24 à 32, **caractérisé en ce que** ledit matériau présente au moins une mésostructure choisie parmi :
- les mésostructures mésoporeuses de symétrie hexagonale tridimensionnelle P63/mmc, de symétrie hexagonale bidimensionnelle P6mm, de symétrie cubique tridimensionnelle la3d, lm3m ou Pn3m ;
- les mésostructures de type vésiculaires ou lamellaires ; ou
- les mésostructures de symétrie L3 dite phases éponge.

34. Matériau selon l'une quelconque des revendications 24 à 28, **caractérisé en ce qu'**il s'agit d'un matériau mésoporeux ordonné, et **en ce que** les pores observés au sein de la mésostructure dudit matériau sont tels qu'au moins 50% de la population des pores présents au sein de la structure possède un diamètre moyen compris entre 2 et 10 nm.

35. Utilisation d'un matériau selon l'une quelconque des revendications 24 à 32 pour des applications catalytiques.

36. Utilisation selon la revendication 33 pour des applications catalytiques dans le domaine de la dépollution automobile ou de la dénitrification d'effluents.

## Claims

1. Method for preparing a sequenced mesoporous or mesostructured material that is thermally stable and at least partially crystallised, said method comprising the following steps:
(A) forming an initial dispersion composed of:
(1) at least partially crystalline colloidal particles of nanometric dimensions, at least 50% of the population of which have an average diameter in the range of between 1 and 40 nm; and
(2) a texturing agent that is a compound that is unloaded in the conditions of use of the method;
(B) concentrating the dispersion obtained in order to obtain a solid by progressive texturing and consolidation of the colloidal particles; and
(C) eliminating the texturing agent in the solid obtained.

2. Method for preparing a sequenced mesoporous or mesostructured material according to claim 1, **characterised in that** the medium of the dispersion formed during step (A) is an acid medium, and **in that** the texturing agent used is a non-ionic surfactant comprising a sequenced polymer.

3. Method for preparing a sequenced mesoporous or mesostructured material according to claim 2, **characterised in that** the medium of the dispersion formed during step (A) is an acid medium, and **in that** the texturing agent used is a non-ionic surfactant comprising a sequenced polymer selected from the tri-block copolymers polyethylene oxide-polypropylene oxide-polyethylene oxide or grafted polyethylene oxides.

4. Method for preparing a sequenced mesoporous or mesostructured material according to claim 1, **characterised in that** the medium of the dispersion formed during step (A) is an alkaline medium, and **in that** the texturing agent used is a primary alkyl amide surfactant.

5. Method for preparing a sequenced mesoporous or mesostructured material according to one of the preceding claims, **characterised in that** said colloidal particles of nanometric dimensions are particles of isotropic or spherical morphology, at least 50% of the population of which have an average diameter in the range of between 3 and 15 nm with a preferably monodisperse granulometric distribution of these particles.

6. Method for preparing a sequenced mesoporous or mesostructured material according to one of the preceding claims, **characterised in that** said colloidal particles are particles of isotropic or spherical morphology, at least 50% of the population of which have an average diameter in the range of between 5 and 10 nm with a preferably monodisperse granulometric distribution of these particles.

7. Method for preparing a sequenced mesoporous or mesostructured material according to any one of the preceding claims, **characterised in that** said colloidal particles of nanometric dimensions have a crystallisation rate ranging from 50 to 100% in volume.

8. Method for preparing a sequenced mesoporous or mesostructured material according to one of the preceding claims, **characterised in that** said colloidal particles of nanometric dimensions are introduced into the initial mixture in the form of a mother dispersion, the concentration of which lies in the range of between 0.1 and 6 moles per litre.

9. Method for preparing a sequenced mesoporous or mesostructured material according claim 8, **characterised in that** the electrical conductivity of the supernatant obtained by ultracentrifugation at 50 000 rpm over 10 hours of said mother dispersion containing the colloidal particles is 200% less than the conductivity of a test solution of the acid HCl or the base NaOH having the same pH as the supernatant thus obtained.

10. Method for preparing a sequenced mesoporous or mesostructured material according to one of claims 1 to 9, **characterised in that** said colloidal particles of nanometric dimensions are particles based on at least one compound of a metal selected from cerium, zirconium or titanium, preferably selected from particles of cerium oxide CeO₂, zirconium oxide ZrO₂, titanium oxide TiO₂ or mixed particles such as CeO₂/ZrO₂ or ZrO₂/CeO₂.

11. Method for preparing a sequenced mesoporous or mesostructured material according to one of claims 1 to 10, **characterised in that** the volume ratio of (texturing agent) / (texturing agent + particles) lies in the range of between 0.36 and 0.70.

12. Method for preparing a sequenced mesoporous or mesostructured material according to one of claims 1 to 11, **characterised in that** the suspension formed during step (A) additionally contains an interaction agent.

13. Method for preparing a sequenced mesoporous or mesostructured material according to claim 12, **characterised in that** the colloidal particles used are composed of cerium oxide, zirconium oxide and/or titanium oxide, and **in that** said interaction agent is a mineral or organic acid.

14. Method for preparing a sequenced mesoporous or mesostructured material according to claim 13, **characterised in that** the texturing agent is composed of modified polyethylene oxide, and **in that** the molar ratio of (H⁺ ions/(ethylene oxide monomers) within the suspension is less than 0.3.

15. Method for preparing a sequenced mesoporous or mesostructured material according to any one of claims 1 to 14, **characterised in that** the suspension formed during step (A) is an aqueous suspension additionally containing a cosolvent.

16. Method for preparing a sequenced mesoporous or mesostructured material according to claim 15, **characterised in that** said cosolvent is selected from methanol, ethanol, propanol or ispropanol.

17. Method for preparing a sequenced mesoporous or mesostructured material according to claim 14 or claim 16, **characterised in that** the volume ratio of cosolvent/water within the suspension is less than or equal to 6.

18. Method for preparing a sequenced mesoporous or mesostructured material according to any one of claims 1 to 17, **characterised in that** the concentration step (B) is achieved by evaporation.

19. Method for preparing a sequenced mesoporous or mesostructured material according to claim 18, **characterised in that** said evaporation is conducted in a single step at a temperature in the range of between 15°C and 80°C for a period in the range of between 3 hours and 7 days.

20. Method for preparing a sequenced mesoporous or mesostructured material according to claim 18, **characterised in that** said evaporation is conducted in multiple steps with increasing stages of temperature between 15°C and 120°C, wherein the period of each of said stages lies in the range of between 3 hours and 24 hours and the steps of temperature increase can be achieved with a gradient of temperature increase in the range of between 0.1 and 6°C per minute or per direct passage into a medium firstly brought to the stage temperature.

21. Method for preparing a sequenced mesoporous or mesostructured material according to any one of claims 1 to 20, **characterised in that** step (C) for the elimination of the texturing agent is conducted by entrainment through a solvent.

22. Method for preparing a sequenced mesoporous or mesostructured material according to any one of claims 1 to 21, **characterised in that** step (C) for the elimination of the texturing agent is conducted by a thermal treatment such as calcination.

23. Method for preparing a sequenced mesoporous or mesostructured material according to claim 22, **characterised in that** said calcination type thermal treatment is conducted at a calcination temperature higher than 200°C, at a rate of temperature increase in the range of between 0.2°C and 5°C per minute, followed by a calcination stage at said calcination temperature for a period in the range of between 0.5 and 10 hours.

24. Sequenced mesoporous or mesostructured material that is thermally stable and at least partially crystallised capable of being prepared according to the method of any one of claims 1 to 23, wherein said material has a double order level, which can be observed on an X-ray diffraction diagram of the material that has peaks corresponding to repetition periods of the order of a few ångströms and peaks characteristic of the spatial repetition period of the mesostructure, in the range of between 2 and 50 nm.

25. Sequenced mesoporous or mesostructured material that is partially crystallised and thermally stable, formed essentially from a compound selected from cerium oxide, zirconium oxide, titanium oxide or a mixture of these compounds, such as a CeO₂/ZrO₂ or ZrO₂/CeO₂ mixture, wherein said material has a double order level, which can be observed on an X-ray diffraction diagram of the material that has peaks corresponding to repetition periods of the order of a few ångströms and peaks characteristic of the spatial repetition period of the mesostructure, in the range of between 2 and 50 nm.

26. Material according to claim 24 or claim 25, **characterised in that** the crystallisation rate of said material is higher than 20% in volume.

27. Material according to claim 24 or claim 25, **characterised in that** the crystallisation rate of said material is higher than 30% in volume.

28. Material according to any one of claims 24 to 27, **characterised in that** the average thickness of the walls of the mesostructure of said material is in the range of between 2 and 40 nm.

29. Material according to any one of claims 24 to 27, **characterised in that** the average thickness of the walls of the mesostructure of said material is in the range of between 3 and 15 nm.

30. Material according to any one of claims 24 to 29, **characterised in that** the average thickness of the walls of the mesostructure of said material is in the range of between 4 and 10 nm.

31. Material according to any one of claims 24 to 30, **characterised in that** after calcination for 6 hours at 500°C, the specific surface area of said material is greater than 800 m²/cm³.

32. Material according to any one of claims 24 to 31, **characterised in that** after calcination for 6 hours at 500°C, the specific surface area of said material is greater than 1000 m²/cm³.

33. Material according to any one of claims 24 to 32, **characterised in that** said material has at least one mesostructure selected from:
• mesoporous mesostructures of three-dimensional hexagonal P63/mmc symmetry, two-dimensional hexagonal P6mm symmetry, three-dimensional cubic Ia3d, Im3m or Pn3m symmetry;
• vesicular or lamellar type mesostructures; or
• mesostructures of L3 symmetry, referred to as sponge phase.

34. Material according to any one of claims 24 to 28, **characterised in that** it is a sequenced mesoporous material, and **in that** the pores observed within the mesostructure of said material are such that at least 50% of the population of the pores present within the structure have an average diameter in the range of between 2 and 10 nm.

35. Use of a material according to any one of claims 24 to 32 for catalytic applications.

36. Use according to claim 33? for catalytic applications in the field of pollution control in motor vehicles or of the denitrification of effluent.

## Patentansprüche

1. Verfahren zur Herstellung eines geordneten mesoporösen oder mesostrukturierten Materials, das thermisch stabil ist und zumindest teilweise kristallisiert ist, wobei das Verfahren die Schritte umfasst, die darin bestehen:
(A) eine Ausgangsdispersion zu bilden, die umfasst:
(1) kolloidale Partikel mit nanometrischen Abmessungen, zumindest teilweise kristallin, von denen mindestens 50% ihrer Gesamtheit einen mittleren Durchmesser zwischen 1 und 40 nm besitzt; und
(2) ein Strukturmittel, das eine nicht geladene Verbindung bei den Bedingungen zur Umsetzung des Verfahrens ist,
(B) die erhaltene Dispersion zu konzentrieren, um durch progressive Texturierung und Verfestigung der kolloidalen Partikel einen Festkörper zu erhalten; und
(C) das Strukturmittel in dem erhaltenen Festkörper zu eliminieren.

2. Verfahren zur Herstellung eines geordneten mesoporösen oder mesostrukturierten Materials nach Anspruch 1, **dadurch gekennzeichnet, dass** das bei dem Schritt (A) gebildete Medium der Dispersion ein Säuremedium ist und dass das eingesetzte Strukturmittel ein nichtionisches Tensid des Typs eines sequenzierten Copolymers ist.

3. Verfahren zur Herstellung eines geordneten mesoporösen oder mesostrukturierten Materials nach Anspruch 2, **dadurch gekennzeichnet, dass** das beim Schritt (A) gebildete Medium der Dispersion ein Säuremedium ist und dass das eingesetzte Strukturmittel ein nichtionisches Tensid des Typs eines sequenzierten Copolymers ist, das aus den Copolymeren Dreiblock Poly(ethylenoxid)-Poly(propylenoxid)-Poly(ethylenoxid) oder gepfropften Poly(ethylenoxid) gewählt ist.

4. Verfahren zur Herstellung eines geordneten mesoporösen oder mesostrukturierten Materials nach Anspruch 1, **dadurch gekennzeichnet, dass** das bei dem Schritt (A) gebildete Medium der Dispersion ein basisches Medium ist und dass das eingesetzte Strukturmittel ein Tensid des Typs primäres Alkylamin ist.

5. Verfahren zur Herstellung eines geordneten mesoporösen oder mesostrukturierten Materials nach einem der vorhergehenden Ansprüche, **dadurch gekennzeichnet, dass** die kolloidalen Partikel mit nanometrischen Abmessungen Partikel mit isotroper oder sphärischer Morphologie sind, von denen mindestens 50% ihrer Gesamtheit einen mittleren Durchmesser zwischen 3 und 15 nm mit einer vorzugsweise monodispersen granulometrischen Verteilung dieser Partikel besitzt.

6. Verfahren zur Herstellung eines geordneten mesoporösen oder mesostrukturierten Materials nach einem der vorhergehenden Ansprüche, **dadurch gekennzeichnet, dass** die kolloidalen Partikel Partikel mit isotroper oder sphärischer Morphologie sind, von denen mindestens 50% ihrer Gesamtheit einen mittleren Durchmesser zwischen 5 und 10 nm mit einer vorzugsweise monodispersen granulometrischen Verteilung dieser Partikel besitzt.

7. Verfahren zur Herstellung eines geordneten mesoporösen oder mesostrukturierten Materials nach einem beliebigen der vorhergehenden Ansprüche, **dadurch gekennzeichnet, dass** die kolloidalen Partikel mit nanometrischen Abmessungen eine Kristallinität von 50 bis 100 Vol.-% aufweisen.

8. Verfahren zur Herstellung eines geordneten mesoporösen oder mesostrukturierten Materials nach einem beliebigen der vorhergehenden Ansprüche, **dadurch gekennzeichnet, dass** die kolloidalen Partikel mit nanometrischen Abmessungen in die Ausgangsmischung in Form einer Mutterdispersion eingetragen werden, deren Konzentration zwischen 0,1 und 6 mol/l liegt.

9. Verfahren zur Herstellung eines geordneten mesoporösen oder mesostrukturierten Materials nach Anspruch 8, **dadurch gekennzeichnet, dass** die elektrische Leitfähigkeit des Überstandes, der durch Ultrazentrifugation bei 50000 U/min während 10 Stunden der die kolloidalen Partikel enthaltenden Mutterdispersion erhalten wird, kleiner als 200% der Leitfähigkeit einer Bezugslösung der Säure HCl oder der Base NaOH ist, die denselben pH-Wert wie der so erhaltene Überstand besitzt.

10. Verfahren zur Herstellung eines geordneten mesoporösen oder mesostrukturierten Materials nach einem beliebigen der Ansprüche 1 bis 9, **dadurch gekennzeichnet, dass** die kolloidalen Partikel mit nanometrischen Abmessungen Partikel auf der Basis mindestens einer Metallverbindung sind, die gewählt wird aus Cer, Zirkon oder Titan, ausgewählt vorzugsweise aus den Partikeln des Ceroxids CeO₂, Zirkonoxids ZrO₂, Titanoxids TiO₂ oder den gemischten Partikeln des Typs CeO_{2/}ZrO₂ oder ZrO₂/CeO₂.

11. Verfahren zur Herstellung eines geordneten mesoporösen oder mesostrukturierten Materials nach einem beliebigen der Ansprüche 1 bis 10, **dadurch gekennzeichnet, dass** das Volumenverhältnis (Strukturmittel)/(Strukturmittel + Partikel) zwischen 0,36 und 0,70 liegt.

12. Verfahren zur Herstellung eines geordneten mesoporösen oder mesostrukturierten Materials nach einem beliebigen der Ansprüche 1 bis 11, **dadurch gekennzeichnet, dass** die bei dem Schritt (A) gebildete Suspension außerdem ein Interaktionsmittel umfasst.

13. Verfahren zur Herstellung eines geordneten mesoporösen oder mesostrukturierten Materials nach Anspruch 12, **dadurch gekennzeichnet, dass** die eingesetzten kolloidalen Partikel des Typs des Ceroxids, des Zirkonoxids und/oder des Titanoxids sind und dass das Interaktionsmittel eine mineralische oder organische Säure ist.

14. Verfahren zur Herstellung eines geordneten mesoporösen oder mesostrukturierten Materials nach Anspruch 13, **dadurch gekennzeichnet, dass** dieses Strukturmittel des Typs eines modifizierten Poly(ethylenoxids) ist und dass das Mol-Verhältnis (Ionen H⁺)/(Ethylenoxidmonomere) in der Suspension kleiner als 0,3 ist.

15. Verfahren zur Herstellung eines geordneten mesoporösen oder mesostrukturierten Materials nach einem beliebigen der Ansprüche 1 bis 14, **dadurch gekennzeichnet, dass** die bei dem Schritt (A) gebildete Suspension eine wässrige Suspension ist, die außerdem ein Mitlösungsmittel enthält.

16. Verfahren zur Herstellung eines geordneten mesoporösen oder mesostrukturierten Materials nach Anspruch 15, **dadurch gekennzeichnet, dass** das Mitlösungsmittel ausgewählt ist aus Methanol, Ethanol, Propanol oder Isopropanol.

17. Verfahren zur Herstellung eines geordneten mesoporösen oder mesostrukturierten Materials nach Anspruch 14 oder Anspruch 16, **dadurch gekennzeichnet, dass** das Volumenverhältnis Mitlösungsmittel/Wasser in der Suspension kleiner oder gleich 6 ist.

18. Verfahren zur Herstellung eines geordneten mesoporösen oder mesostrukturierten Materials nach einem beliebigen der Ansprüche 1 bis 17, **dadurch gekennzeichnet, dass** der Schritt (B) der Konzentrierung durch Verdampfung realisiert ist.

19. Verfahren zur Herstellung eines geordneten mesoporösen oder mesostrukturierten Materials nach Anspruch 18, **dadurch gekennzeichnet, dass** die Verdampfung in einem einzigen Schritt bei einer Temperatur zwischen 15°C und 80°C während einer Dauer zwischen 3 Stunden und 7 Tagen durchgeführt wird.

20. Verfahren zur Herstellung eines geordneten mesoporösen oder mesostrukturierten Materials nach Anspruch 19, **dadurch gekennzeichnet, dass** die Verdampfung in mehreren Schritten mit steigenden Temperaturstufen zwischen 15°C und 120°C durchgeführt wird, wobei die Temperatur jedes der Schritte zwischen 3 Stunden und 24 Stunden liegt und die Schritte der Erhöhung der Temperatur mit einem Gradienten des Temperaturanstiegs zwischen 0,1 und 6°C pro Minute oder durch direkten Übergang in ein Medium durchgeführt wird, das vorher auf die Temperatur der Stufe gebracht ist.

21. Verfahren zur Herstellung eines geordneten mesoporösen oder mesostrukturierten Materials nach einem beliebigen der Ansprüche 1 bis 20, **dadurch gekennzeichnet, dass** der Schritt (C) der Eliminierung des Strukturmittels durch Transport mit einem Lösungsmittel realisiert ist.

22. Verfahren zur Herstellung eines geordneten mesoporösen oder mesostrukturierten Materials nach einem beliebigen der Ansprüche 1 bis 21, **dadurch gekennzeichnet, dass** der Schritt (C) der Eliminierung des Strukturmittels durch eine thermische Behandlung des Typs der Kalzination durchgeführt wird.

23. Verfahren zur Herstellung eines geordneten mesoporösen oder mesostrukturierten Materials nach Anspruch 22, **dadurch gekennzeichnet, dass** die thermische Behandlung des Typs der Kalzination bei einer Kalzinationstemperatur größer als 200°C mit einer Anstiegsgeschwindigkeit der Temperatur zwischen 0,2°C und 5°C pro Minute, gefolgt von einem Kalzinationsschritt bei der Kalzinationstemperatur einer Dauer zwischen 0,5 und 10 Stunden durchgeführt wird.

24. Geordnetes mesoporöses oder mesostrukturiertes Material, das thermisch stabil und mindestens teilweise kristallisiert ist, geeignet gemäß dem Verfahren nach einem der Ansprüche 1 bis 23 hergestellt zu werden, wobei das Material ein doppeltes Ordnungsniveau aufweist, das auf einem Röntgenstrahlenbeugungs-Diagramm des Materials beobachtbar ist, das Spitzen entsprechend der Wiederholperioden in der Größenordnung von einigen Ångström und charakteristische Spitzen der räumlichen Wiederholperiode der Mesostruktur zwischen 2 und 50 nm aufweist.

25. Mesostrukturiertes oder geordnetes mesoporöses Material, teilweise kristallin und thermisch stabil, das hauptsächlich von einer Verbindung gebildet wird, die zwischen dem Ceroxid, dem Zirkonoxid, dem Titanoxid oder einer Mischung dieser Verbindungen, wie eine Mischung des Typs CeO₂/ZrO₂ oder ZrO₂/CeO₂ ausgewählt wird, wobei das Material ein doppeltes Ordnungsniveau aufweist, das auf einem Röntgenstrahlenbeugungs-Diagramm des Materials beobachtbar ist, das Spitzen entsprechend der Wiederholperioden in der Größenordnung von einigen Ångström und charakteristische Spitzen der räumlichen Wiederholperiode der Mesostruktur zwischen 2 und 50 nm aufweist.

26. Material nach Anspruch 24 oder Anspruch 25, **dadurch gekennzeichnet, dass** die Kristallinität des Materials mehr als 20 Vol.-% beträgt.

27. Material nach Anspruch 24 oder Anspruch 25, **dadurch gekennzeichnet, dass** die Kristallinität des Materials mehr als 30 Vol.-% beträgt.

28. Material nach einem beliebigen der Ansprüche 24 bis 27, **dadurch gekennzeichnet, dass** die mittlere Dicke der Wände der Mesostruktur des Materials zwischen 2 und 40 nm liegt.

29. Material nach einem beliebigen der Ansprüche 24 bis 27, **dadurch gekennzeichnet, dass** die mittlere Dicke der Wände der Mesostruktur des Materials zwischen 3 und 15 nm liegt.

30. Material nach einem beliebigen der Ansprüche 24 bis 29, **dadurch gekennzeichnet, dass** die mittlere Dicke der Wände der Mesostruktur des Materials zwischen 4 und 10 nm liegt.

31. Material nach einem beliebigen der Ansprüche 24 bis 30, **dadurch gekennzeichnet, dass** nach der Kalzinierung von 6 Stunden bei 500°C die spezifische Fläche des Materials größer als 800 m²/cm³ beträgt.

32. Material nach einem beliebigen der Ansprüche 24 bis 31, **dadurch gekennzeichnet, dass** nach einer Kalzinierung von 6 Stunden bei 500 °C die spezifische Oberfläche des Materials größer als 1000 m²/cm³ ist.

33. Material nach einem beliebigen der Ansprüche 24 bis 32, **dadurch gekennzeichnet, dass** das Material mindestens eine Mesostruktur aufweist, die ausgewählt ist aus:
- den mesoporösen Mesostrukturen mit hexagonaler dreidimensionaler P63/mmc-Symmetrie, mit hexagonaler zweidimensionaler P6mm-Symmetrie, mit kubischer dreidimensionaler la3d-, lm3m- oder Pn3m-Symmetrie;
- den Mesostrukturen des vesikulären oder lamellaren Typs oder
- Mesostrukturen der Symmetrie L3, genannt Schwammphasen.

34. Material nach einem beliebigen der Ansprüche 24 bis 28, **dadurch gekennzeichnet, dass** es sich um ein geordnetes mesoporöses Material handelt, und dass die in der Mesostruktur des Materials beobachteten Poren derart sind, dass mindestens 50% der Gesamtheit der Poren, die in der Struktur vorhanden sind, einen mittleren Durchmesser zwischen 2 und 10 nm besitzen.

35. Verwendung eines Materials nach einem beliebigen der Ansprüche 24 bis 32 für katalytische Anwendungen.

36. Verwendung nach Anspruch 33 für katalytische Anwendungen in dem Bereich der Automobilentgiftung oder der Stickstoffentziehung von Abwässern.
